# EUROPEAN PATENT APPLICATION

(11) **EP 4 588 731 A1**
(43) Date of publication of application: **23.07.2025**
(21) Application number: 24152776.1
(22) Date of filing: 19.01.2024
(51) Int. Cl.: B60S 1/38, B60S 1/34

(54) **WINDSHIELD WIPER BLADE ASSEMBLY**

(71) Applicant: VOLVO TRUCK CORPORATION, 405 08 Göteborg (SE)
(72) Inventor: V, Sri Gokulnath, 642126 Udumalpet (IN); Y, Prakash, 560046 BANGALORE (IN); HORANE, Tanuja, 411060 Pune (IN)
(74) Representative: Germain Maureau

(57) **Abstract**

The invention relates to a windshield wiper blade assembly, comprising a windshield wiper blade (1) with an articulation element (25) for articulating the blade (1) to a wiper arm, wherein the assembly further comprises an electrical connector (6) including two coaxial parts configured to rotate relative to each other, one part of which being intended to be secured to the articulation element (25) and the other part of which being intended to be secured to the wiper arm, wherein one part of the two coaxial parts is a male part including at least one male connector and the other part is a female part including at least one female connector associated with said at least one male connector, said at least one female connector being arranged in a circular groove, so that said at least one male connector is able to move in rotation inside the groove and to contact said at least one female connector during the rotation of the two coaxial parts relative to each other.

## Description

### TECHNICAL FIELD

The disclosure relates generally to windshield wiper blades and, more specifically, to a windshield blade assembly that is particularly suited for melting ice on a windshield of a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Known windshield wipers have a wiper arm sitting on a wiper shaft which is driven by a wiper motor. A wiper blade is connected to the free end of the wiper arm in an articulated joint.

During freezing winter weather it is necessary before driving a motor vehicle to mechanically remove any ice from the windshield and other windows, usually by scraping with a sharp scraper blade. This is a time consuming and tiresome process, which often results in scratching the glass.

It is known to use electric heating means for heating the wiper blade, the wiper blade being therefore heated and moved across the windshield in order to transfer heat from the blade to melt any ice on the windshield. This makes it possible to remove ice directly from the windshield during operation of wiper blades, saving time and preventing any scratching of the windshield glass.

An important objective is to ensure an effective electrical connection to the wiper blade, whatever its articulated position.

### SUMMARY

According to a first aspect of the disclosure, a windshield wiper blade assembly comprises a windshield wiper blade with an articulation element for articulating the blade to a wiper arm, wherein the assembly further comprises an electrical connector including two coaxial parts configured to rotate relative to each other, one part of which being intended to be secured to the articulation element and the other part of which being intended to be secured to the wiper arm, wherein one part of the two coaxial parts is a male part including at least one male connector and the other part is a female part including at least one female connector associated with said at least one male connector, said at least one female connector being arranged in a circular groove, so that said at least one male connector is able to move in rotation inside the groove and to contact said at least one female connector during the rotation of the two coaxial parts relative to each other.

The first aspect of the disclosure may seek to ensure an effective electrical connection to the wiper blade, whatever its articulated position, thanks to the cooperation of the two parts of the electrical connector. The male connectors are guided along the grooves during articulation and contact the female connectors, maintaining a constant power supply to the wiper blade.

In some examples, the electrical connector is connected to an electrical power source and to a circuit for supplying electrical power to the blade. In particular, a part of the electrical connector can be connected to an electrical power source whereas the other part of the electrical connector is connected to a circuit for supplying electrical power to the blade.

In some examples, each male connector includes a projection and each female connector includes a circular strip.

In some examples, the female part comprises two coaxial circular strips, one of which constituting the positive pole and one of which constituting the negative pole, and the male part comprises at least one projection associated with the circular strip constituting the positive pole and at least one projection associated with the circular strip constituting the negative pole.

In some examples, the windshield wiper blade comprises bristles forming a brush, the bristles being connected to an electrical circuit and the bristles being able to change rigidity according to the voltage supplied.

In some examples, the windshield wiper blade comprises heating elements arranged inside the windshield wiper blade.

In some examples, a windshield wiper comprises a windshield wiper blade assembly described above.

In some examples, the windshield wiper comprises a wiper arm, one part of the two coaxial parts of the electrical connector being secured to the articulation element of the windshield wiper blade and the other part being secured to the wiper arm.

In some examples, the wiper arm comprises an oscillating arm and a sliding arm mounted on a spring and able to slide inside the oscillating arm.

In some examples, the sliding arm comprises a motor for rotating the windshield wiper blade.

In some examples, a shaft passing through the electrical connector is able to transmit the movement of the motor for rotating the blade to the windshield wiper blade.

In some examples, the sliding arm comprises a variable throw nozzle.

In some examples, a motor vehicle comprises a windshield wiper described above.

In some examples, the motor vehicle comprises a windshield equipped with rain sensors.

In some examples, the motor vehicle is a truck.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a perspective view of a windshield wiper blade according to one example.
**FIG. 2** is a side view of the windshield wiper blade of **FIG. 1****.**
**FIG. 3** is a top view of the windshield wiper blade of **FIG. 1****.**
**FIG. 4** is a detail view of an extremity of the windshield wiper blade.
**FIG. 5** is a schematic view of an electric circuit of the windshield wiper blade.
**FIG. 6** is a first detail view of an electrical connector of the windshield wiper blade.
**FIG. 7** is a second detail view of the electrical connector.
**FIG. 8** is a third detail view of the electrical connector.
**FIG. 9** is a fourth detail view of the electrical connector.
**FIG. 10** is a fifth detail view of the electrical connector.
**FIG. 11** is a front view of a windshield with part of a wiper according to one embodiment.
**FIG. 12** is a first partial view of a wiper arm of the wiper.
**FIG. 13** is a second partial view of the wiper arm.
**FIG. 14** is a view of a spring of the wiper arm, in an extended position.
**FIG. 15** is a view of a spring of the wiper arm, in a retracted position.
**FIG. 16** is a detail view of the wiper.
**FIG. 17** is a first perspective view of a valve of a windshield washer fluid reservoir.
**FIG. 18** is a second perspective view of the valve.
**FIG. 19** is a perspective view of a windshield.
**FIG. 20** is a perspective view of a controller.
**FIG. 21** is a perspective view of a windshield washer fluid reservoir.
**FIG. 22** illustrates a first step of an assembly process of a windshield wiper according to one example.
**FIG. 23** illustrates a second step of the assembly process of the windshield wiper.
**FIG. 24** illustrates a third step of the assembly process of the windshield wiper.
**FIG. 25** illustrates a fourth step of the assembly process of the windshield wiper.
**FIG. 26** is a block diagram illustrating the operation of the windshield wiper according to one example.

### DETAILED DESCRIPTION

Aspects set forth below represent the necessary information to enable those skilled in the art to practice the disclosure.

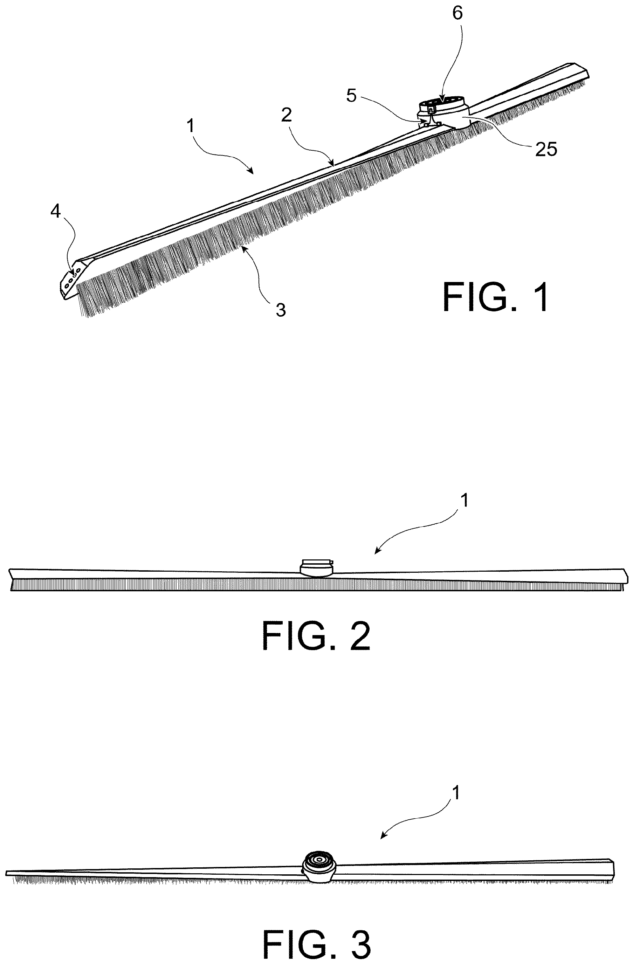

**FIG. 1** is a perspective view of a windshield wiper blade 1 according to one example, whereas **FIG. 2** is a side view of the windshield wiper blade of **FIG. 1** and **FIG. 3** is a top view of the windshield wiper blade of **FIG. 1****.**

The windshield wiper blade 1 has a generally longitudinal orientation. The blade 1 includes a blade body 2, bristles 3, heating coils 4, electric cables 5 and an articulation element 25 equipped with an electrical connector 6.

The blade body 2 advantageously has a profile with sharp edges and is preferably twisted along its longitudinal axis, so as to chop the ice. The electric cables 5 carry electrical power to the bristles 3 and to the heating coils 4.

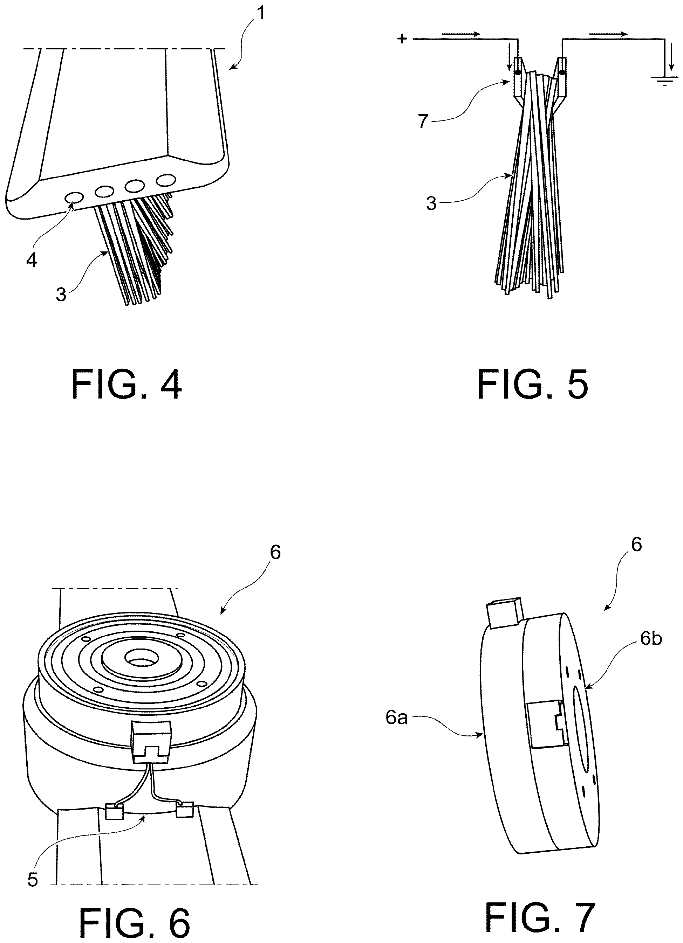

**FIG. 4** is a detail view of a longitudinal extremity of the windshield wiper blade 1. The heater coils 4 are heating elements housed inside the blade body 2. The heater coils 4 are used to heat the blade 1, which will melt the ice on the windshield.

The bristles 3 form a brush and rub against the windshield to evacuate water and snow, taking it out of the driver's field of vision. The bristles are preferably made of an ionic polymer, which belongs to the family of electroactive polymers. These bristles dynamically change rigidity according to the voltage supplied. The operating voltage is typically between 0 and 2 V. At 0 V, the bristles are less rigid, like the equivalent of a soft rubber, while at 2 V, the bristles are very rigid, like the equivalent of a hard rubber. Thus, the bristles are able to both wipe off the water and scrape off the ice.

**FIG. 5** is a schematic view of the electric circuit including the bristles 3. The bristles 3 may be connected in series between two electrodes 7.

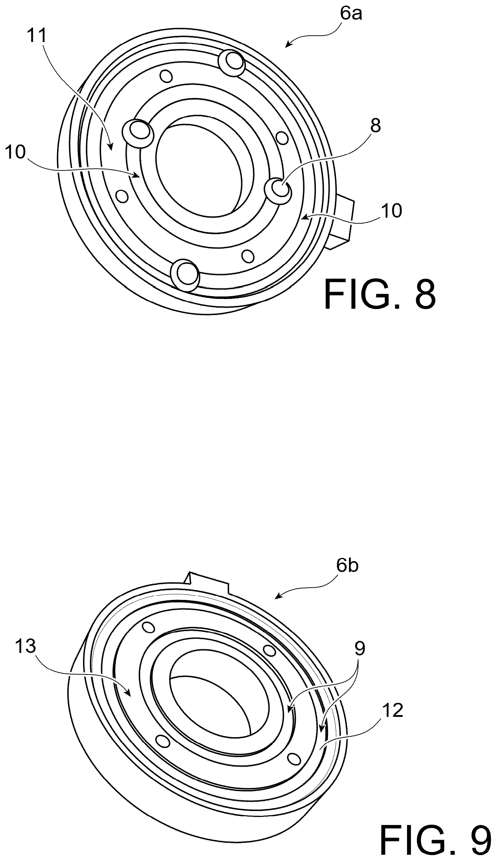

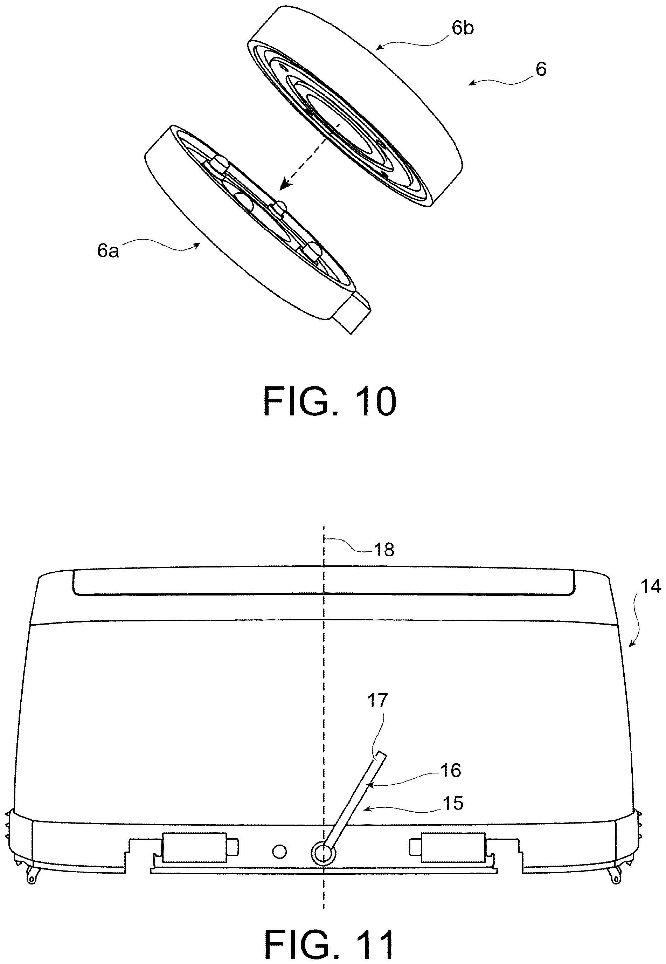

**FIG. 6** is a first detail view of the electrical connector 6 of the windshield wiper blade 1, whereas **FIG. 7** is a second detail view of electrical connector, **FIG. 8** is a third detail view of the electrical connector, **FIG. 9** is a fourth detail view of the electrical connector and **FIG. 10** is a fifth detail view of the electrical connector.

The electrical connector 6 is designed to electrically connect the blade 1 to both an electrical power source and to a circuit for supplying electrical power to the heating elements 4 and to the bristles 3. The electrical connector 6 comprises two parts 6a, 6b facing each other and configured to rotate relative to each other. The two parts 6a, 6b can be annular parts, namely a male annular part 6a and a female annular part 6b. The two annular parts 6a, 6b are intended to fit together and rotate relative to each other through the cooperation of projections 8 (male connectors) of the male annular part 6a with grooves 9 of the female annular part 6b.

The male part 6a can be made of a completely insulated material with two concentric circular conductive strips 10 inserted between it, one constituting the positive pole and one constituting the negative pole. One or more protruding projections 8 of each conductive strip 10 fits into a corresponding groove 9 of the female part 6b. The male part 6a may also include mounting holes 11. Two projections 8 may protrude from each conductive strip 10. In each conductive strip 10 the two projections 8 can be diametrically opposed. The two projections 8 of the positive conductive strip can be can be aligned along an axis orthogonal to the alignment axis of the two projections 8 of the negative conductive strip.

The female part 6b is also made of an insulated material with two concentric circular conductive strips 12 facing the two circular conductive strips 10 of the male part 6a and sandwiched between the insulated material like the male part 6a, but unlike the male part 6a projections 8, it has grooves 9 to accommodate the projections 8. The conductive strips 12 can be placed at the bottom of the grooves 9. The projections 8 of the male part 6a are guided along the grooves 9 during articulation, maintaining a constant power supply to the wiper blade 1. The two conductive strips 12 of the female part 6b are designed to be electrically connected to the corresponding conductive strips 10 of the male part 6a via the projections 8, so that a male part conductive strip 10 being a positive pole is connected to a female part strip 12 forming thus a positive pole, and so that a male part conductive strip 10 being a negative pole is connected to a female part conductive strip 12 forming thus a negative pole. The female part 6a may also include mounting holes 13.

During assembly, the male part 6a and the female part 6b are mounted coaxially.

**FIG. 11** is a front view of a windshield 14 with part of a wiper 15 according to one embodiment. The wiper 15 comprises a wiper arm 16 including an oscillating arm 17. The oscillating arm 17 is mounted on the lower part of the windshield 14 and is aligned with the central line 18 of the windshield 14, so that a single wiper 15 can cover the entire windshield 14.

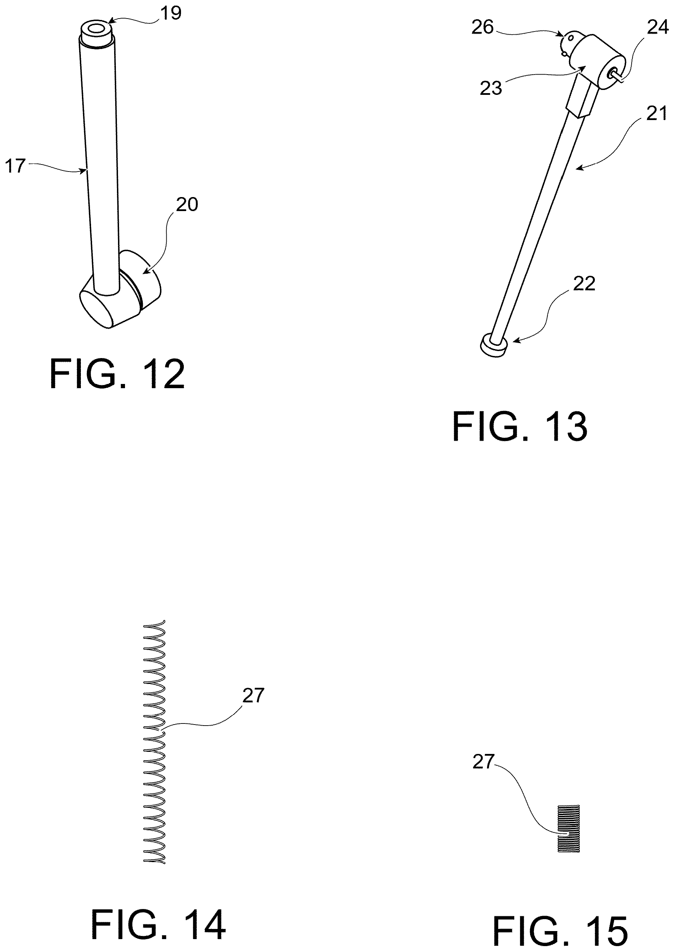

**FIG. 12** is a first partial view of a wiper arm 16 of the wiper 15. The oscillating arm 17 is hollow to accommodate a sliding arm of the wiper arm 16, and has an upper stop 19 to limit the movement of the sliding arm. The lower end of the oscillating arm 17 includes a mounting part 20 for connecting the oscillating arm 17 to a motor capable of rotating the mounting part 20 and thus causing the oscillating arm 17 to oscillate.

**FIG. 13** is a second partial view of the wiper arm 16, illustrating the sliding arm 21. The sliding arm 21 is able to slide inside the oscillating arm 17. The total length of the wiper arm 16 can thus vary between approximately the length of the oscillating arm 17 and the sum of the length of the oscillating arm 17 and of the length of the sliding arm 21. The lower end of the sliding arm 21 comprises a lower stop 22 cooperating with the upper stop 19 of the oscillating arm 17 to limit the sliding movement of the sliding arm 21 within the oscillating arm 17. The upper end of the sliding arm 21 is fitted with a motor 23, like a stepper motor, to facilitate the articulated movement of the wiper blade 1. A shaft 24, positioned at the front of the upper end of the sliding arm 21, is intended to transmit the movement of the stepper motor 23 to the wiper blade 1 via an articulation element 25 of the wiper blade 1 receiving the shaft 24. The rear of the upper end of the sliding arm 21 comprises a variable throw nozzle 26.

**FIG. 14** is a view of a spring 27 of the wiper, in an extended position, whereas **FIG. 15** is a view of the spring 27, in a retracted position. The spring 27 is used to maintain the sliding arm 21 in a retracted position when not extended. The stiffness of the spring 27 determines the time required to move from the retracted position to the extended position.

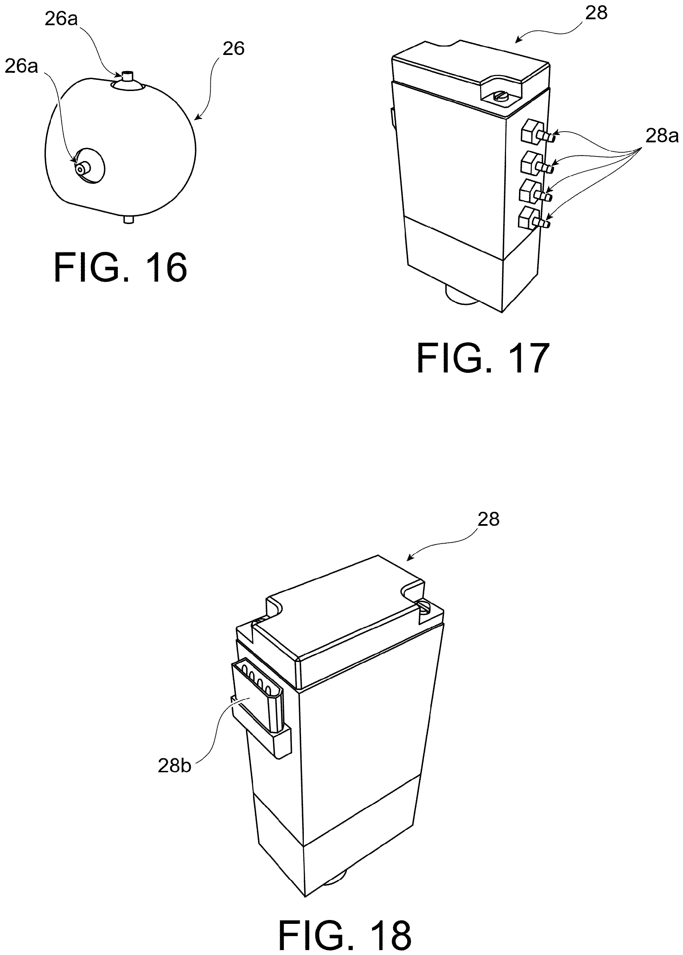

**FIG. 16** is a detail view of the wiper, illustrating the variable throw nozzle 26, whereas **FIG. 17** is a first perspective view of a valve 28 of a windshield washer fluid reservoir and **FIG. 18** is a second perspective view of the valve 28. The variable throw nozzle 26 has four nozzles 26a pointing in four different directions. Each nozzle 26a is connected to an individual water pipe 28a, which makes it possible to regulate the water flow from each nozzle 26a. The nozzle 26 is permanently located on the sliding arm 21 and only sprays water on the wiping area, which saves water. A variable throw solenoid valve is used like a regular trap, the opening amount being controlled by a current value. An electrical connector 28b having four pins controls the water flow for the four different nozzles 26a.

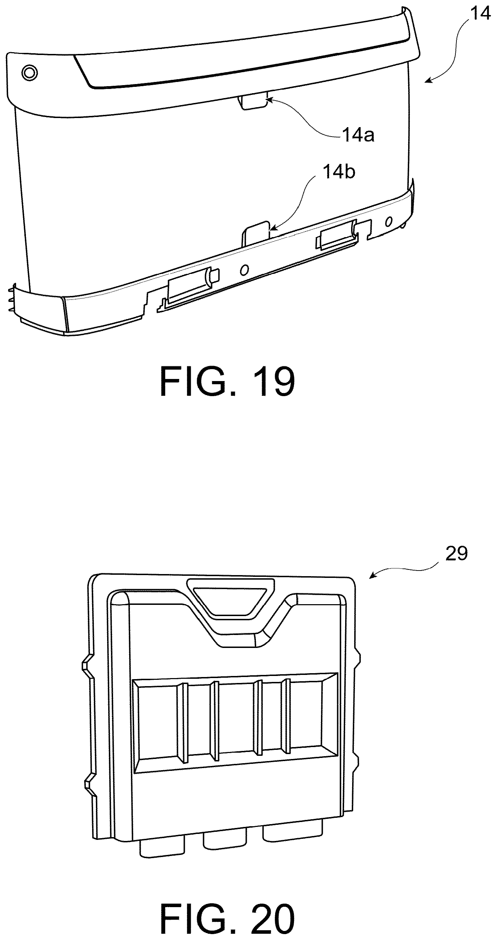

**FIG. 19** is a perspective view of a windshield 14. Existing windshields can be used and can also include a top rain sensor 14a and a bottom rain sensor 14b.

**FIG. 20** is a perspective view of a controller 29. It allows automatic change of wiper modes depending in particular on the data from the rain sensors.

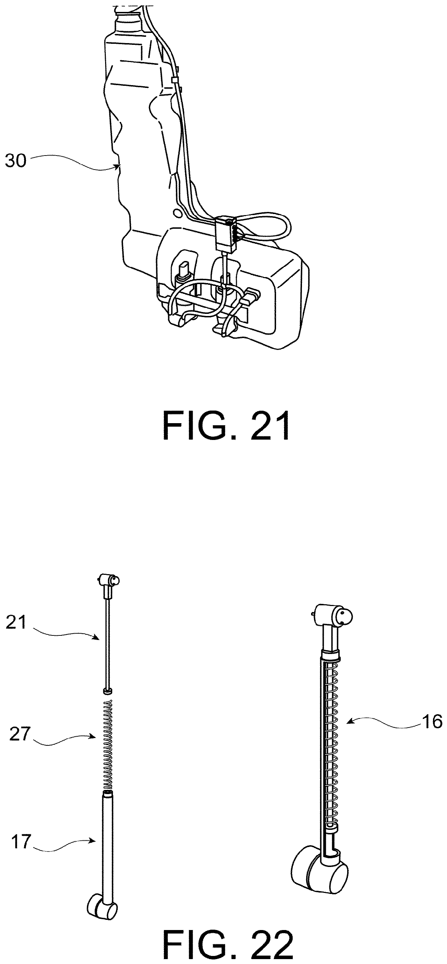

**FIG. 21** is a perspective view of a windshield washer fluid reservoir 30 that can be used.

**FIG. 22** illustrates a first step of an assembly process of a windshield wiper according to one example. In this first step, the sliding arm 21 and the spring 27 are inserted into the oscillating arm 17, thus forming the wiper arm 16.

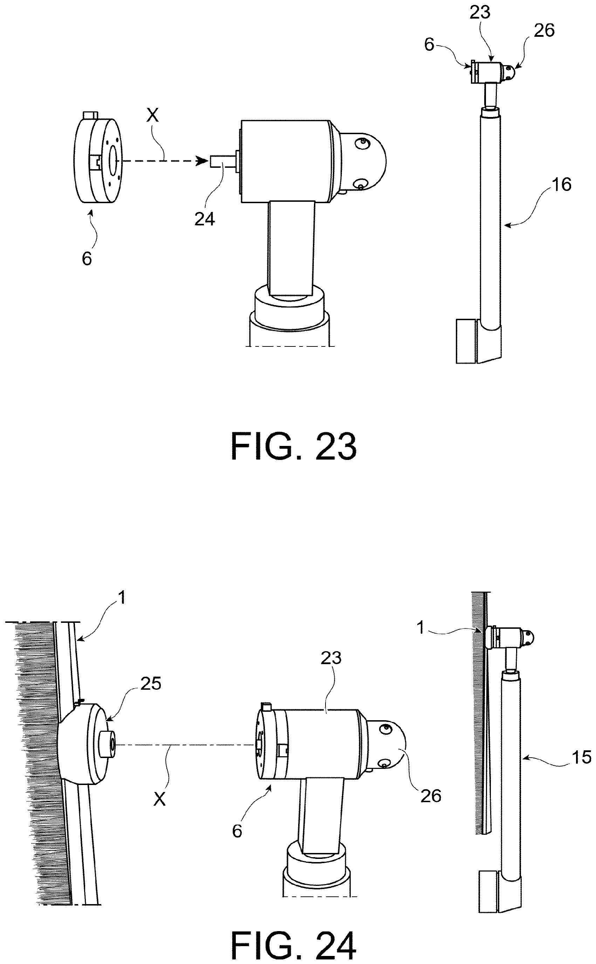

**FIG. 23** illustrates a second step of the assembly process of the windshield wiper. The electrical connector 6 is secured to the upper part of the sliding arm 21. More precisely, one annular part of the electrical connector 6 is secured to the sliding arm 21 whereas the other annular part is intended to be secured to the wiper blade 1. The electrical connector 6 and the stepper motor 23 are arranged coaxially according to the rotation axis X.

**FIG. 24** illustrates a third step of the assembly process of the windshield wiper. The other annular part of the electrical connector 6 is secured to the articulation element 25 of the wiper blade 1. Simultaneously, the shaft 24 is secured to the articulation element 25, which makes it possible to drive in rotation the wiper blade 1 by the stepper motor 23. The shaft 24 passes inside the connector 6. The wiper blade 1 and the stepper motor 23 are arranged coaxially according to the axis X. The wiper blade 1 extends perpendicularly to the articulation axis X.

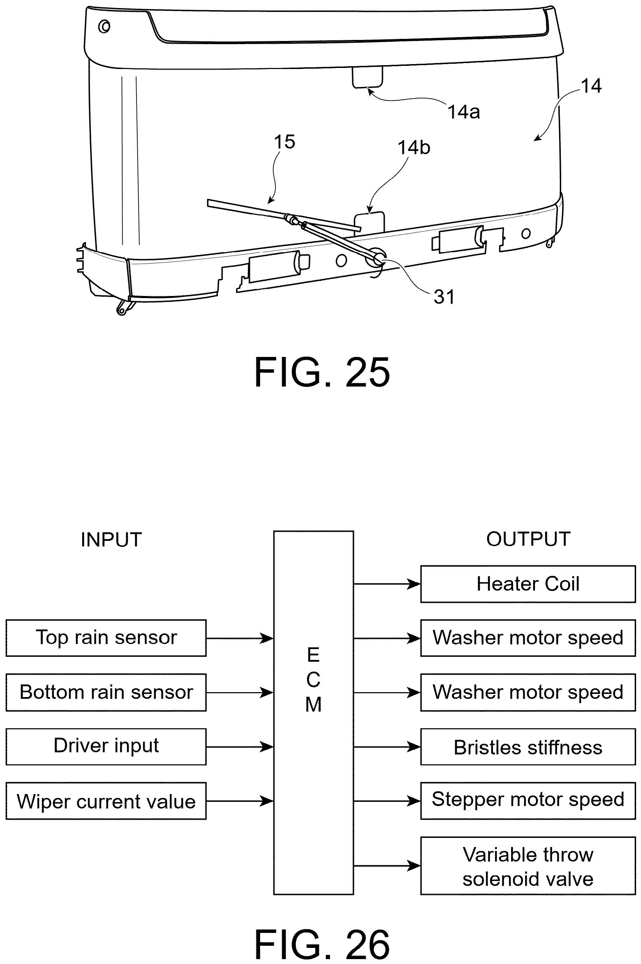

**FIG. 25** illustrates a fourth step of the assembly process of the windshield wiper. Electrical wires 31 are installed on the wiper arm 16, so as to supply electricity to the connector 6. Water pipe connections are also made. Thus, the entire assembly 15 is mounted on the windshield 14.

Four distinct operating modes can be implemented: an extended mode, a wiping mode, a scraping mode, a safe mode, and a spray mode.

### Extended mode.

This mode allows the wiper blade to reach the furthest point of the windshield 14.

To achieve the extension, the speed of the oscillating arm 17 is increased, generating a centrifugal force that pulls outwards, thus reaching the furthest point of the windshield 14.

This extended mode can be activated manually or automatically, once the user has selected the extended mode on the dashboard. The speed of the wiper motor is increased and the oscillation speed is also increased so as to reach the furthest point.

In automatic mode, the controller 29 collects information from the rain sensors. If the top rain sensor 14a signals a high water flow, the controller 29 activates the extended mode. Similarly, if the bottom rain sensor 14b signals a high water flow, the controller 29 deactivates the extended mode. This extension and retraction can also be changed dynamically, for example in a 180 degree wiper oscillation, the first 40 degrees can be in an extended configuration, the second 100 degrees can be in a retracted configuration, and the last 40 degrees can be in an extended configuration. The controller 29 can activate and deactivate the extended mode at any time.

### Wiping mode.

This mode is used to wipe water and soft ice from the windshield 14, as the bristles 3 can dynamically change their stiffness. For the wiping mode, the voltage is between 0 and 2 volts.

This mode can also be activated manually and automatically. In manual mode, the driver must select the required stiffness on the dashboard.

In automatic mode, the controller 29 collects rain sensor data after each wipe. If the rain sensor reading is constant even after three wipes (meaning continuous water or soft ice), controller 29 increases the stiffness of the bristles 3 on consecutive wipes until the values decrease. If the rain sensor values drop significantly during the first three wipes, the controller 29 maintains the bristles 3 in a state of low stiffness.

### Scraping mode.

This mode is used to scrape hard ice. In this mode, the wiper cuts the ice and heats it up before wiping it in the wiping mode.

This mode can also be activated manually or automatically. In manual mode, the driver must select this mode on the dashboard.

In automatic mode, the controller 29 continuously monitors the value of the wiper motor current. If the wiper motor consumes more current than usual, this indicates the presence of hard ice on the windshield 14, in which case the controller 29 engages the wiper blade in the wiping mode.

In the scraping mode, the wiper blade is heated by the heating coils 4, and the bristles 3 become less stiff. Then the stepper motor 23 starts and begins to rotate the wiper blade 1 at a speed of 100 rpm. The wiper blade 1 has sharp edges that cut the ice into small pieces and melt them simultaneously due to their high temperature. The temperature of the wiper blade can raise in 5 seconds. Once the hard ice has been removed, the system switches to the wiping mode and the process continues in the wiping mode.

### Safe mode.

This mode will only be activated by the controller 29 if it detects a sensor failure (or malfunction). In this mode, the controller 29 will only wipe the predetermined area that is already programmed by the controller 29.

The predetermined area is the area of the windshield 14 through which the driver can see for 99% of the time.

### Spray mode.

This mode is used to clean the windshield 14 as usual, but the water flow can also be controlled in each nozzle 26a. This mode must be used manually. This mode is a kind of extra function.

In this mode, the driver can fully control which nozzle 26a the water is to be sprayed into (depending on the location of the dust), how many nozzles 26a the water is to be sprayed into (depending on the amount of dust) and how fast the water should be sprayed (depending on the adhesion of the dust). The controller 29 will then gather all this information and execute these requests using the variable jet solenoid valve and the speed of the washer motor.

The extended mode can be activated and deactivated for all modes.

The windshield wiper described above increases coverage by 2.5 times compared with existing wipers. A single wiper is therefore sufficient to cover the entire windshield. This reduces the weight and associated cost of the wiper.

**FIG. 26** is a block diagram illustrating windshield wiper operation according to one example. The ECM (Engine Control Module) receives information from four different sources: the top rain sensor, the bottom rain sensor, the driver input and the wiper current value. Based on these four inputs, the ECM operates the heater coil, the wiper motor speed, the bristles stiffness, the stepper motor speed, the variable throw solenoid valve and the washer motor speed to engage the different operating modes.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A windshield wiper blade assembly, comprising a windshield wiper blade (1) with an articulation element (25) for articulating the blade (1) to a wiper arm (16), wherein the assembly further comprises an electrical connector (6) including two coaxial parts (6a, 6b) configured to rotate relative to each other, one part of which being intended to be secured to the articulation element (25) and the other part of which being intended to be secured to the wiper arm (16), wherein one part of the two coaxial parts (6a, 6b) is a male part (6a) including at least one male connector (8) and the other part is a female part (6b) including at least one female connector (12) associated with said at least one male connector (8), said at least one female connector (12) being arranged in a circular groove (9), so that said at least one male connector (8) is able to move in rotation inside the groove (9) and to contact said at least one female connector (12) during the rotation of the two coaxial parts (6a, 6b) relative to each other.

2. The windshield wiper blade assembly of claim 1, wherein the electrical connector (6) is connected to an electrical power source (31) and to a circuit (5) for supplying electrical power to the blade (1).

3. The windshield wiper blade assembly of claim 1 or 2, wherein each male connector (8) includes a projection and wherein each female connector (12) includes a circular strip.

4. The windshield wiper blade assembly of any claims 1-3, wherein the female part (6b) comprises two coaxial circular strips (12), one of which constituting the positive pole and one of which constituting the negative pole, and wherein the male part (6a) comprises at least one projection (8) associated with the circular strip constituting the positive pole and at least one projection (8) associated with the circular strip constituting the negative pole.

5. The windshield wiper blade assembly of any claims 1-4, wherein the windshield wiper blade (1) comprises bristles (3) forming a brush, the bristles (3) being connected to an electrical circuit and the bristles (3) being able to change rigidity according to the voltage supplied.

6. The windshield wiper blade assembly of any claims 1-5, wherein the windshield wiper blade (1) comprises heating elements (4) arranged inside the windshield wiper blade (1).

7. A windshield wiper (15) comprising a windshield wiper blade assembly (1) according to any of claims 1-6.

8. The windshield wiper (15) of claim 7, wherein the wiper comprises a wiper arm (16), one part of the two coaxial parts (6a, 6b) of the electrical connector (6a) being secured to the articulation element (25) of the windshield wiper blade (1) and the other part being secured to the wiper arm (16).

9. The windshield wiper (15) of claim 8, wherein the wiper arm (16) comprises an oscillating arm (17) and a sliding arm (21) mounted on a spring (27) and able to slide inside the oscillating arm (17).

10. The windshield wiper (15) of claim 9, wherein the sliding arm (21) comprises a motor (23) for rotating the windshield wiper blade (1).

11. The windshield wiper (15) of claim 10, wherein a shaft (24) passing through the electrical connector (6) is able to transmit the movement of the motor for rotating the blade to the windshield wiper blade (1).

12. The windshield wiper (15) of any claims 9-11, wherein the sliding arm (21) comprises a variable throw nozzle (26).

13. A motor vehicle comprising a windshield wiper (15) according to any of claims 7-12.

14. The motor vehicle according to claim 13, wherein the motor vehicle comprises a windshield (14) equipped with rain sensors (14a, 14b).

15. The motor vehicle according to claim 13 or 14, wherein the motor vehicle is a truck.
